# FASCICULE DE BREVET EUROPEEN

(11) **EP 1 277 568 B1**
(45) Date de publication et mention de la délivrance du brevet: **02.01.2008**
(21) Numéro de dépôt: 02291729.8
(22) Date de dépôt: 09.07.2002
(51) Int. Cl.: B32B 3/12, B29D 24/00, B29C 47/20, E04C 2/20, B65D 65/40

(54) **Nouvelles plaques alvéolaires en matière plastique, notamment en polycarbonate**
Kunststoffstegdoppelplatten, insbesondere aus Polycarbonaten
Multi-channel thermoplastic panels, in particular of polycarbonate

(30) Priorité: 17.07.2001 FR 0109553
(43) Date de publication de la demande: 22.01.2003
(73) Titulaire: KAYSERSBERG PACKAGING, 68320 Kunheim (FR)
(72) Inventeur: Coste, Jean-Philippe, 68240 Kaysersberg (FR); Porret, Laurent, 68180 Horbourg-Wihr (FR)
(74) Mandataire: Bernasconi, Jean Raymond

(56) Documents cités:
- EP-A- 0 054 856
- DE-A- 4 431 585

## Description

La présente invention a trait à de nouvelles plaques alvéolaires en polycarbonate ou en matière plastique similaire et notamment en matière plastique transparente.

Les plaques alvéolaires en matière plastique, par exemple, en polycarbonate, sont des plaques obtenues par extrusion à partir d'un poinçon, de façon à présenter, dans le sens de leur largeur, c'est-à-dire, en direction perpendiculaire à la direction d'extrusion, une succession d'alvéoles longitudinales dans le sens de l'extrusion. Une telle plaque présente deux nappes de couverture formant les deux faces externes de la plaque et une série d'entretoises internes entre ces nappes, ces entretoises étant perpendiculaires et/ou inclinées par rapport auxdites nappes, en général perpendiculaires. Dans certains cas des nappes intermédiaires parallèles aux deux nappes de couverture sont présentes, de sorte qu'une telle plaque peut former des alvéoles superposées dans l'épaisseur de la plaque.

EP-A-54856 décrit une plaque alvéolaire avec des alvéoles du même largeur.

On recherche naturellement à assurer une résistance aussi élevée que possible à ces plaques pour une masse surfacique aussi faible que possible, et ceci se fait, en général, en augmentant le nombre d'entretoises, c'est-à-dire en diminuant le pas entre deux entretoises consécutives, qui définit la largeur d'une alvéole. Une telle mesure présente cependant l'inconvénient, à masse surfacique égale, de diminuer l'épaisseur des nappes ou couvertures, et, pour les plaques transparentes, et notamment les plaques en polycarbonate, de diminuer la transparence et d'affecter l'aspect esthétique des plaques en raison de la présence de nombreuses entretoises.

L'invention se propose de remédier à ces inconvénients et de fournir une plaque alvéolaire en matière plastique, et notamment une plaque en polycarbonate ou en matériau plastique transparent ou translucide, du type comprenant au moins deux nappes parallèles et une pluralité d'entretoises parallèles formant des alvéoles dans la plaque, caractérisée en ce que dans au moins une zone de la plaque, le pas des alvéoles consécutifs varie de façon progressive.

Il est ainsi possible d'avoir, dans la plaque, au moins une zone dans laquelle le pas est relativement grand et au moins une zone dans laquelle le pas est plus petit, la résistance étant améliorée dans cette dernière zone, alors que l'ensemble de la plaque présente une apparence transparente ou translucide convenable.

Dans une forme de réalisation préférée, on prévoit, dans la plaque, au moins une zone à pas faible, de préférence constant et au moins une zone à pas plus grand, de préférence également constant et, entre les deux zones, une zone de pas variable rejoignant progressivement les pas des deux zones.

De préférence, on choisira un pas réduit sur les bords latéraux de la plaque pour améliorer la résistance dans la zone où elle sera mise en feuillure, dans un profilé, ou autrement fixée.

De préférence une telle plaque aura, à partir du bord latéral, un certain nombre d'alvéoles de pas réduit constant, puis des alvéoles de pas régulièrement croissant, puis une zone d'alvéoles de grand pas constant.

Ainsi, on peut avantageusement prévoir une plaque dont les deux zones latérales, donc vers les bords (qui sont parallèles à la direction d'extrusion), ont un pas réduit, alors que la partie centrale de la plaque, de préférence la partie la plus importante, possède un pas large.

Dans le cas d'une plaque de grande largeur, destinée à être découpée en son milieu pour produire deux laizes, on peut former, dans la partie centrale, une zone de pas réduit, ayant de préférence une largeur double de celle des zones de pas réduit latérales, et à partir de laquelle s'étendent, de part et d'autre, deux zones de pas progressivement croissant, rejoignant deux zones de grand pas constant.

Dans une autre forme de réalisation, au contraire, on pourra prévoir une zone centrale à pas étroit et des zones latérales à pas plus grand.

Dans une autre forme de réalisation, encore, on peut prévoir que la zone à pas plus réduit s'étende uniquement sur un bord, le reste de la plaque ayant un pas plus grand, y compris sur l'autre bord.

De préférence la variation progressivement du pas des alvéoles est telle qu'elle ne donne pas une impression optique de bande délimitée lorsqu'on regarde la plaque.

De préférence la variation de pas, dans les zones de pas variable, s'effectue par incrément de 2 à 10% du pas le plus faible, cet incrément pouvant être préférentiellement de 3%.

La largeur des zones de pas variable, dans les plaques possédant également au moins une zone de pas fixe petit et/ou au moins une zone de pas fixe grand est, de préférence comprise entre 25 et 75% de la largeur totale de la plaque, et notamment, entre 30 et 50%.

Dans un autre aspect de l'invention, cette largeur est de préférence comprise entre 50 et 150 fois l'épaisseur de la plaque.

Grâce à l'invention, pour une plaque ayant sensiblement la même masse surfacique et présentant, par exemple sur ses bords, une zone de pas faible lui conférant la résistance d'une plaque usuelle ayant ce pas faible, on obtient, grâce à la présence des alvéoles de pas supérieures dans d'autres zones de la plaque, un coefficient de transmission thermique surfacique plus bas, ce qui améliore les capacités d'isolation.

L'invention présente également l'avantage d'améliorer les possibilités de découpe des plaques par rapport aux zones à pas réduit. Une découpe effectuée dans une zone de pas réduit offre davantage d'apparence de symétrie par rapport à une découpe dans une zone à pas large et permet de réduire les éventuelles éclat de découpe.

Egalement, pour les plaques selon l'invention ayant des zones de pas réduit sur les côtés, la manipulation est plus aisée, les plaques étant plus rigides sur les bords.

D'autres avantages et caractéristiques de l'invention apparaîtront à la lecture de la description suivante faite à titre d'exemple non limitatif, et se référant au dessin annexé dans lequel la figure unique représente une vue en coupe perpendiculaire à la direction d'extrusion d'une plaque alvéolaire selon l'invention.

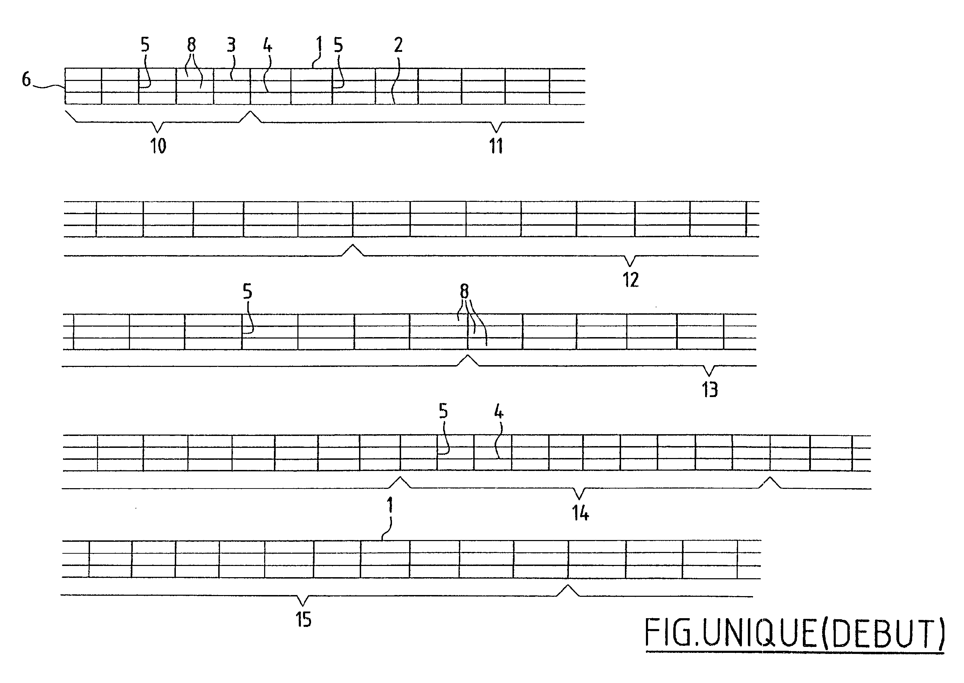

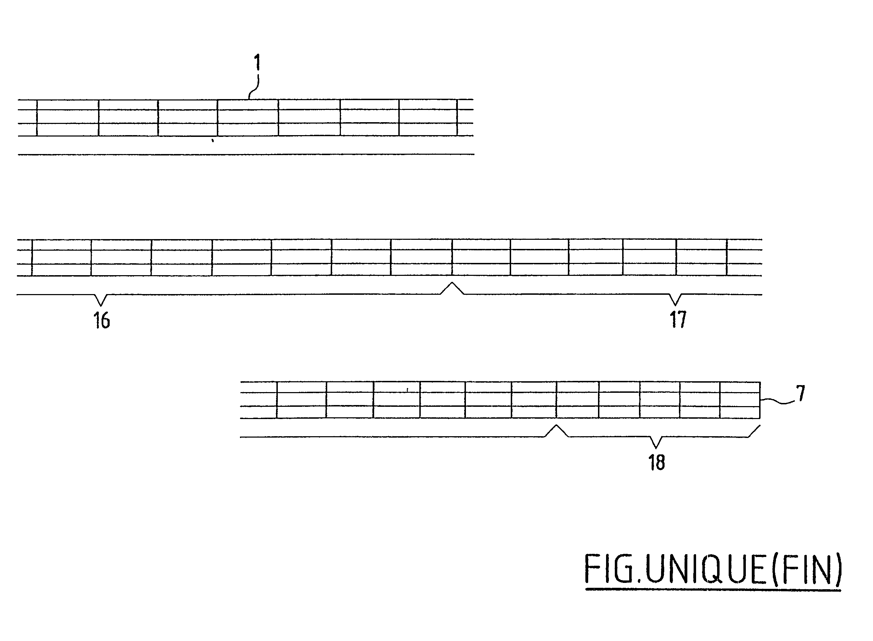

La plaque représentée sur la figure 1 est une plaque extrudée en polycarbonate ayant une épaisseur de 10 mm avec une masse surfacique moyenne de 1900 g/m2 et dont la largeur, perpendiculairement à la direction de l'extrusion, est par exemple de 210 cm. Cette plaque comporte quatre nappes parallèles, à savoir une nappe de couverture supérieure 1, une nappe de couverture inférieure 2 et deux nappes planes intermédiaires équidistantes, 3, 4. La plaque comporte d'autre part une pluralité d'entretoises 5, s'étendant de la couverture 1 vers la couverture 2 perpendiculairement aux nappes 1 à 4, les entretoises latérales extrêmes formant les bords 6 et 7 de la plaque. Ces entretoises 5 forment avec les différentes nappes une pluralité d'alvéoles 8 de section rectangulaire et dirigées longitudinalement dans le sens d'extrusion de la plaque.

Conformément à l'invention, la largeur des alvéoles 8, c'est-à-dire le pas entre deux entretoises consécutives 5 est le même pour les cinq premiers groupes d'alvéoles consécutives dans le sens transversal, perpendiculaire à l'extrusion à partir du bord latéral 6, formant ainsi une zone latérale de pas réduit 10. Au-delà, dans une zone de pas variable 11, le pas des alvéoles commence à croître progressivement pour finir par atteindre une valeur constante, plus grande, dans la partie centrale de la plaque.

On aboutit ainsi à une zone 12 de grand pas constant. Lorsque l'on se rapproche de la partie centrale de la plaque, le pas se remet à diminuer progressivement dans une zone 13, par exemple symétrique de la zone 11. On aboutit ainsi à une zone centrale 14 de pas réduit, dont la largeur peut être, par exemple, sensiblement le double de celle de la zone latérale 10. Au-delà, la partie de droite de la plaque est symétrique par rapport au milieu de plaque pour former les zones 15, 16, 17, 18, respectivement symétriques des zones 13, 12, 11 et 10.

Une telle plaque peut aisément être divisée en deux laizes identiques, par découpe longitudinale au milieu de la zone centrale 14.

A titre d'exemple, le pas le plus faible des cinq groupes d'alvéoles latérales est de 10mm, alors que le pas le plus important dans la partie centrale est de 16mm. De préférence l'accroissement progressif des alvéoles passées du premier pas au second pas est de 3 %.

## Revendications

1. Plaque alvéolaire en matière plastique, et notamment en polycarbonate ou en matériau plastique transparent ou translucide, du type comprenant au moins deux nappes parallèles (1,2) et une pluralité d'entretoises parallèles (5) formant des alvéoles (8) dans la plaque, **caractérisée en ce que** dans au moins une zone (11,13,15,17) de la plaque, le pas des alvéoles consécutifs varie de façon progressive.

2. Plaque selon la revendication 1, **caractérisée en ce qu**'elle présente au moins une zone à pas faible (10,14,18) et au moins une zone à pas plus grand (12,16) et, entre les deux zones, une zone de pas variable (11, 13,15,17) rejoignant progressivement les pas des deux zones.

3. Plaque selon la revendication 2, **caractérisée en ce que**, dans la zone de pas faible et/ou dans la zone de pas plus grand, le pas est constant.

4. Plaque selon l'une des revendications 1 à 3 **caractérisée en ce qu'**elle présente un pas réduit sur l'un au moins des bords latéraux (6,7) de la plaque (10,18) pour améliorer la résistance dans la zone où elle sera mise en feuillure, dans un profilé, ou autrement fixée.

5. Plaque selon la revendication 4, **caractérisée en ce qu**'elle présente, à partir du bord latéral (6,7) un certain nombre d'alvéoles de pas réduit constant, puis des alvéoles de pas régulièrement croissant, puis une zone (12,16) d'alvéoles de grand pas constant.

6. Plaque selon la revendication 5, **caractérisée en ce qu**'elle présente deux zones latérales, extrêmes de pas réduit (10,18) alors que la partie centrale de la plaque possède un pas large.

7. Plaque selon la revendication 1 possédant une grande largeur et destinée à être découpée en son milieu pour produire deux laizes, **caractérisée en ce qu**'elle possède dans la partie centrale, une zone de pas réduit (14) à partir de laquelle s'étendent, de part et d'autre, deux zones de pas progressivement croissant (13,15) rejoignant deux zones de grand pas constant (12,16).

8. Plaque selon la revendication 7 **caractérisée en ce qu'**elle possède deux zones latérales extrêmes (10,18) de pas réduit, se raccordant aux zones de grand pas constant (12,16), par deux zones de pas progressivement variable (11,17).

9. Plaque selon la revendication 7, **caractérisée en ce que** la zone centrale de pas réduit (14) possède une largeur double de celle de la zone latérale de pas réduit (10, 18) .

10. Plaque selon l'une des revendications 1 à 3 **caractérisée en ce qu**'elle comporte une zone centrale à pas réduit et des zones latérales à pas plus grand.

11. Plaque selon l'une des revendications 1 à 10, **caractérisée en ce que** la variation progressivement du pas des alvéoles est telle qu'elle ne donne pas une impression optique de bande délimitée lorsqu'on regarde la plaque.

12. Plaque selon l'une des revendications 1 à 11, **caractérisée en ce que** la variation de pas, dans les zones de pas variable, s'effectue par incrément de 2 à 10% du pas le plus faible, et notamment de 3%.

13. Plaque selon l'une des revendications 1 à 12 **caractérisée en ce que** la largeur des zones de pas variable (11, 13, 15, 17) dans les plaques possédant également au moins une zone de pas fixe petit et/ou au moins une zone de pas fixe grand est, comprise entre 25 et 75%, et notamment 30 à 50% de la largeur de la plaque.

14. Plaque selon l'une des revendications 1 à 13, **caractérisée en ce que** la largeur de la zone de pas variable (11,13,15,17) est comprise entre 50 et 150 fois l'épaisseur de la plaque.

## Claims

1. Cellular panel made of plastic, in particular polycarbonate or a transparent or translucent plastic, of the type comprising at least two parallel sheets (1, 2) and a plurality of parallel crosspieces (5) forming cells (8) in the panel, **characterised in that** the spacing of consecutive cells varies progressively in at least one zone (11, 13, 15, 17) of the panel.

2. Panel according to claim 1, **characterised in that** it has at least one zone of narrow spacing (10, 14, 18) and at least one zone of larger spacing (12, 16) and between the two zones a zone of variable spacing (11, 13, 15, 17) progressively joining the spacings of the two zones.

3. Panel according to claim 2, **characterised in that** the spacing is constant in the zone of narrow spacing and/or in the zone of larger spacing.

4. Panel according to one of claims 1 to 3, **characterised in that** it has a reduced spacing on at least one of the lateral edges (6, 7) of the panel (10, 18) to improve resistance in the zone where it will be rebated into a profile or secured in another way.

5. Panel according to claim 4, **characterised in that** starting from the lateral edge (6, 7), it has a number of cells with constant reduced spacing, then cells with regularly increasing spacing, then a zone (12, 16) of cells with constant large spacing.

6. Panel according to claim 5, **characterised in that** it has two lateral end zones of reduced spacing (10, 18), while the central section of the panel has a wide spacing.

7. Panel according to claim 1, having a large width and intended to be cut out in its centre to produce two standard widths, **characterised in that** in the central section it has a zone of reduced spacing (14), from which two zones of progressively increasing spacing (13, 15) extend on either side to join two zones of constant large spacing (12, 16).

8. Panel according to claim 7, **characterised in that** it has two lateral end zones (10, 18) with reduced spacing connecting to the zones of constant large spacing (12, 16) through two zones of progressively variable spacing (11, 17).

9. Panel according to claim 7, **characterised in that** the central zone of reduced spacing (14) has a width double that of the lateral zone of reduced spacing (10, 18).

10. Panel according to one of claims 1 to 3, **characterised in that** it comprises a central zone of reduced spacing and lateral zones of larger spacing.

11. Panel according to one of claims 1 to 10, **characterised in that** the progressive variation in the spacing of the cells is such that when the panel is looked at it does not give the optical impression of a band divided by boundaries.

12. Panel according to one of claims 1 to 11, **characterised in that** the variation in spacing in the zones of variable spacing occurs in increments of 2 to 10% of the smallest spacing, in particular 3%.

13. Panel according to one of claims 1 to 12, **characterised in that** the width of the zones of variable spacing (11, 13, 15, 17) in the panels also having at least one zone of small fixed spacing and/or at least one zone of large fixed spacing is in the range of between 25 and 75%, in particular 30 to 50%, of the width of the panel.

14. Panel according to one of claims 1 to 13, **characterised in that** the width of the zone of variable spacing (11, 13, 15, 17) is in the range of between 50- and 150-times the thickness of the panel.

## Patentansprüche

1. Wabenplatte aus Kunststoff und insbesondere aus Polycarbonat oder aus durchsichtigem oder durchscheinendem Kunststoff, der Art die mindestens zwei parallele Schichten (1, 2) umfasst und mehrere parallele Querstreben (5), die Zellen (8) in der Platte ausbilden, **dadurch gekennzeichnet, dass** sich in mindestens einem Bereich (11, 13, 15, 17) der Platte die Schrittweite der aufeinanderfolgenden Zellen allmählich ändert.

2. Platte nach Patentanspruch 1, **dadurch gekennzeichnet, dass** sie mindestens einen Bereich mit kleiner Schrittweite (10, 14, 18) aufweist und mindestens einen Bereich mit größerer Schrittweite (12, 16) und zwischen den beiden Bereichen einen Bereich mit veränderlicher Schrittweite (11, 13, 15, 17), die sich allmählich den Schrittweiten der beiden Bereiche annähert.

3. Platte nach Patentanspruch 2, **dadurch gekennzeichnet, dass** die Schrittweite im Bereich der kleinen Schrittweite und/oder im Bereich der größeren Schrittweite konstant ist.

4. Platte nach einem der Patentansprüche 1 bis 3, **dadurch gekennzeichnet, dass** sie an mindestens einem der Seitenrander (6, 7) der Platte (10, 18) eine geringere Schrittweite aufweist, um die Widerstandsfähigkeit in dem Bereich zu verbessern, in dem sie in einen Falz oder ein Profil eingesetzt oder anderswie befestigt wird.

5. Platte nach Patentanspruch 4, **dadurch gekennzeichnet, dass** sie ausgehend vom Seitenrand (6, 7) eine bestimmte Anzahl Zellen konstanter kleiner Schrittweite aufweist, dann Zellen mit regelmäßig wachsender Schrittweite, dann einen Bereich (12, 16) mit Zellen großer konstanter Schrittweite.

6. Platte nach Patentanspruch 5, **dadurch gekennzeichnet, dass** sie zwei äußere seitliche Bereiche kleiner Schrittweite (10, 18) aufweist, während der zentrale Bereich der Platte eine große Schrittweite aufweist.

7. Platte nach Patentanspruch 1, eine große Breite aufweisend und dazu bestimmt, in ihrer Mitte zerschnitten zu werden, um zwei Breiten zu schaffen, **dadurch gekennzeichnet, dass** sie im zentralen Bereich über einen Bereich kleiner Schrittweite (14) verfügt, von der ausgehend sich beiderseits zwei Bereiche allmählich zunehmender Schrittweite (13, 15) erstrecken, die auf zwei Bereiche großer konstanter Schrittweite (12, 16) treffen.

8. Platte nach Patentanspruch 7, **dadurch gekennzeichnet, dass** sie zwei äußere Seitenbereiche kleiner Schrittweite (10, 18) aufweist, die über zwei Bereiche allmählich veränderlicher Schrittweite (11, 17) mit den Bereichen großer konstanter Schrittweite (12, 16) verbunden sind.

9. Platte nach Patentanspruch 7, **dadurch gekennzeichnet, dass** der zentrale Bereich mit kleiner Schrittweite (14) die doppelte Breite aufweist, wie der Seitenbereich kleiner Schrittweite (10, 18).

10. Platte nach einem der Patentansprüche 1 bis 3, **dadurch gekennzeichnet, dass** sie einen zentralen Bereich mit kleiner Schrittweite aufweist und Seitenbereiche mit größerer Schrittweite.

11. Platte nach einem der Patentansprüche 1 bis 10, **dadurch gekennzeichnet, dass** die allmähliche Änderung der Schrittweite der Zellen derart ist, dass sie nicht den optischen Eindruck eines abgegrenzten Streifens erweckt, wenn die Platte betrachtet wird.

12. Platte nach einem der Patentansprüche 1 bis 11, **dadurch gekennzeichnet, dass** die Änderung der Schrittweite in den Bereichen veränderlicher Schrittweite durch Erhöhungen um 2 bis 10% der kleinsten Schrittweite erfolgt und insbesondere um 3%.

13. Platte nach einem der Patentansprüche 1 bis 12, **dadurch gekennzeichnet, dass** die Breite der Bereiche veränderlicher Schrittweite (11, 13, 15, 17) in den Platten, die auch mindestens einen Bereich mit fester kleiner Schrittweite und/oder mindestens einen Bereich mit fester großer Schrittweite aufweisen, zwischen 25 und 75% und insbesondere zwischen 30 und 50% der Breite der Platte beträgt.

14. Platte nach einem der Patentansprüche 1 bis 13, **dadurch gekennzeichnet, dass** die Breite des Bereichs veränderlicher Schrittweite (11, 13, 15, 17) zwischen dem 50- und 150-fachen der Dicke der Platte beträgt.
